# EUROPEAN PATENT APPLICATION

(11) **EP 2 398 155 A1**
(43) Date of publication of application: **21.12.2011**
(21) Application number: 09839868.8
(22) Date of filing: 10.02.2009
(51) Int. Cl.: H04B 7/02

(54) **METHOD, DEVICE AND SYSTEM FOR COOPERATIVE MULTI-POINT TRANSMISSION**

(71) Applicant: Huawei Technologies Co., Ltd., Shenzhen, Guangdong 518129 (CN)
(72) Inventor: REN, Xiaotao, Shenzhen Guangdong 518129 (CN); QU, Bingyu, Shenzhen Guangdong 518129 (CN); WAN, Lei, Shenzhen Guangdong 518129 (CN); CHENG, Xingqing, Shenzhen Guangdong 518129 (CN)
(74) Representative: Epping - Hermann - Fischer
(86) International application number: PCT/CN2009/070389
(87) International publication number: WO 2010/091545

(57) **Abstract**

A method, an apparatus, and a system for Coordinated Multi-Point (CoMP) transmission are provided, which can effectively improve the transmission reliability over the control channel and flexibility of the application. The method includes: allocating different resources to a control channel carrying coordination information and a data channel, and performing CoMP transmission over the control channel and the data channel by using the allocated different resources. The technical solutions provided in the present invention are applicable to an Orthogonal Frequency Division Multiplexing (OFDM) system, a Code Division Multiple Access (CDMA) system, a Time Division Multiple Access (TDMA) system, or other mobile communication systems.

## Description

### FIELD OF THE INVENTION

The present invention relates to mobile communication technologies, and in particular, to a method, an apparatus, and a system for Coordinated Multi-Point (CoMP) transmission.

### BACKGROUND OF THE INVENTION

The 4^{th} Generation (4G) mobile communication system is a substitute for the 3^{rd} Generation (3G) mobile communication system (such as a Wideband Code Division Multiple Access (WCDMA) system, a Time Division-Synchronous Code Division Multiple Access (TD-SCDMA) system, and a Code Division Multiple Access 2000 (CDMA2000) system), and the post-3G mobile communication system (such as a Long Term Evolution Release 8 (LTE R8) system and an Ultra Mobile Broadband (UMB) system). The 4G mobile communication system provides higher peak user throughput, average user throughput, and edge user throughput, and enables users to have a better experience in data transmission. The CoMP transmission technology, as a critical technology for the 4G mobile communication system, plays an irreplaceable role in greatly improving the spectrum efficiency.

CoMP transmission means that multiple geographically separated Access Points (APs) provide data transmission services for one or multiple users at the same time. A conventional cell may include multiple APs or one AP (equivalent to a cell). In addition, the multiple APs may belong to the same or different evolved NodeBs (eNodeBs).

If multiple APs that provide services for the same user or multiple users belong to the same eNodeB, that is, a short-delay and large-capacity connection is set up between an AP and an eNodeB (for example, an optical fiber connection), these APs may share data with the eNodeB through the short-delay and large-capacity connection. In addition, the eNodeB may send real-time control instructions (for example, an interference negotiation instruction or a resource scheduling signaling) to the APs through this connection, so as to implement the downlink dynamic CoMP transmission and the uplink dynamic CoMP reception.

If multiple APs that provide services for the same user or multiple users belong to different eNodeBs, the real-time data cannot be shared between the eNodeBs due to the restriction of the interface between eNodeBs (the interface between the eNodeBs is generally a long-delay and small-capacity interface, such as an X2 interface). Under such circumstances, the static or semi-static coordinated transmission and reception, for example, coordinated beamforming, can still be achieved. However, the dynamic negotiation may not be implemented.

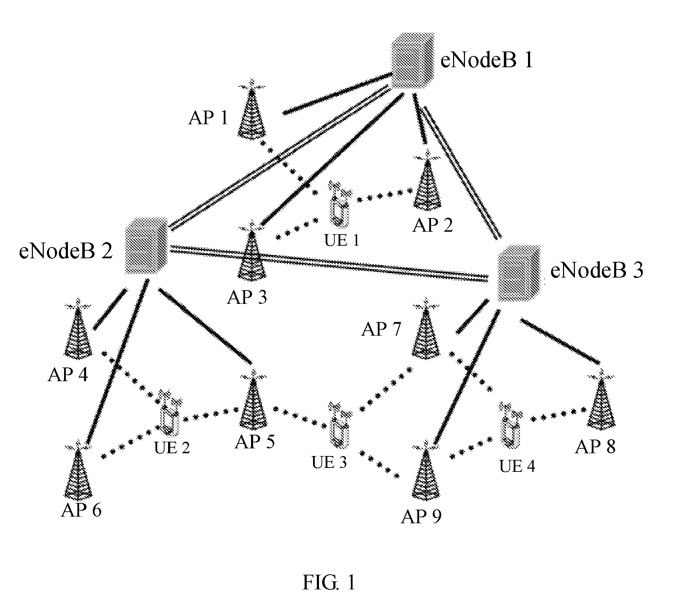

As shown in FIG. 1, the AP 1, AP 2, and AP 3 that provide data transmission services for the UE 1 belong to the eNodeB 1, but the AP 5, AP 7, and AP 9 that provide data transmission services for the UE 3 belong to different eNodeBs. Specifically, the AP 5 belongs to the eNodeB 2, and the AP 7 and AP 9 belong to the eNodeB 3. For CoMP transmission, not only the control channel carrying coordination information, but also the data channel are required to perform coordinated transmission.

During the implementation of the present invention, the inventor finds that:

In the current CoMP transmission scheme, it is generally considered that the data channel and control channel use the same available resource set (the same AP or AP set), or the resource set for the control channel carrying the coordination information is a subset of the resource set for the data channel. In addition, in the current multi-point transmission system, the Reference Signal (RS) pattern design is the same for both the control channel and the data channel; or the control channel and data channel use the same RS pattern to implement channel estimation. Because the control channel has a higher requirement for the Bit Error Ratio (BER), and the coverage ranges of the control channel and the data channel do not match with each other completely, the reliability of data transmission over the control channel and data channel is restricted.

### SUMMARY OF THE INVENTION

Embodiments of the present invention provide a method, an apparatus, and a system for CoMP transmission, which can effectively improve the data transmission reliability over the control channel and data channel.

Specifically, one embodiment of the present invention provides a method for CoMP transmission. The method includes: allocating different resources to a control channel carrying coordination information and a data channel, and performing CoMP transmission over the control channel and the data channel by using the allocated different resources.

Another embodiment of the present invention provides an apparatus for CoMP transmission. The apparatus includes: a resource allocating unit, configured to allocate different resources to a control channel carrying coordination information and a data channel; and a transmission unit, configured to perform CoMP transmission over the control channel and the data channel by using the different resources allocated by the resource allocating unit.

Another embodiment of the present invention provides a system for CoMP transmission. The system includes: a core network, configured to allocate different resources to a control channel carrying coordination information and a data channel and perform CoMP transmission over the control channel and data channel by using the allocated different resources; and a User Equipment (UE), configured to receive data and the coordination information from the different resources.

According to the preceding technical solutions, because the control channel uses the resources that are different from those of the data channel to perform the CoMP transmission, the control channel and data channel have different coverage ranges. As a result, the BER of the control channel can be reduced, and the reliability of data transmission over the control channel and data channel is improved.

### BRIEF DESCRIPTION OF THE DRAWINGS

To make the technical solutions of the embodiments of the present invention or the prior art clearer, the accompanying drawings for illustrating the embodiments of the present invention or the prior art are outlined below. Apparently, the embodiments described with the accompanying drawings are merely exemplary, and persons having ordinary skill in the art can derive other drawings from such accompanying drawings without any creative efforts.
FIG. 1 is a schematic architecture diagram of a system for CoMP transmission in a prior art;
FIG. 2 is a schematic flowchart of a method for CoMP transmission according to one embodiment of the present invention;
FIG. 3 is a schematic flowchart of a method for CoMP transmission according to another embodiment of the present invention;
FIG. 4 is a schematic flowchart of a method for CoMP transmission according to yet another embodiment of the present invention; and
FIG. 5 is a schematic structure diagram of an apparatus for CoMP transmission according to one embodiment of the present invention.

### DETAILED DESCRIPTION OF THE EMBODIMENTS

To make the objectives, technical solutions and merits of the present invention clearer, the following describes the technical solutions of the present invention in detail with reference to the accompanying drawings and exemplary embodiments. Obviously, the embodiments are exemplary part of rather than all of embodiments of the present invention. Those skilled in the art can derive other embodiments from the embodiments given herein without making any creative effort, and all such embodiments are covered in the protection scope of the present invention.

The core idea of the present invention is to allocate different resources to a control channel carrying coordination information and a data channel, and perform CoMP transmission over the control channel and the data channel by using different resources. The resources include: APs or AP sets, carriers or carrier sets, RS patterns or RS pattern sets, subframes or subframe sets, physical resource blocks or physical resource block sets, timeslots or timeslot sets, Orthogonal Frequency Division Multiplexing (OFDM) symbols or OFDM symbol sets, sequences or sequence sets, sequence offsets or sequence offset sets, sequence combs or sequence comb sets, frequency-hopping patterns or frequency-hopping pattern sets, periods or period sets, and scramblers or scrambler sets. The CoMP transmission is performed, by using completely different resources or by using partially same resources, over the control channel carrying the coordination information and the data channel.

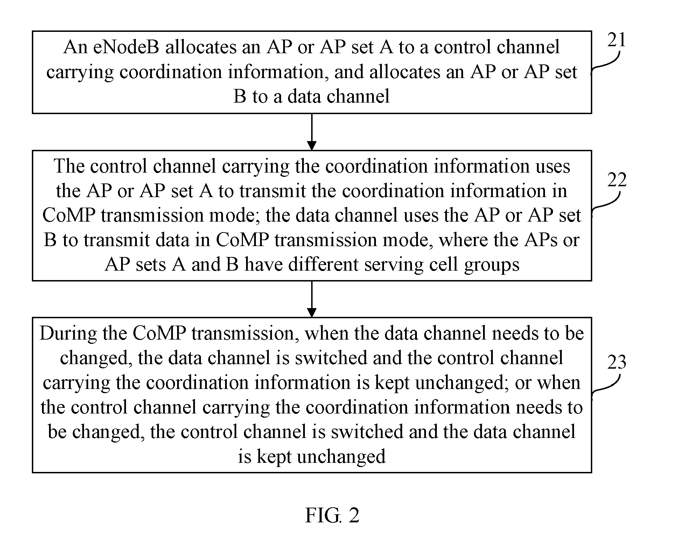

Referring to FIG. 2, an embodiment of the present invention provides a method for CoMP transmission. The method includes the following steps:
Step 21: An eNodeB allocates an AP a or AP set A to a control channel carrying coordination information, and allocates an AP b or AP set B to a data channel.
Step 22: The control channel carrying the coordination information uses the AP a or AP set A to transmit the coordination information in CoMP transmission mode. The data channel uses the AP b or AP set B to transmit data in CoMP transmission mode. The APs a and b or AP sets A and B have different serving cell groups. For example, different Virtual Serving Cell (VSC) group IDs may be used to identify the AP or AP set. In addition, the AP or AP set may also be indicated or bound by using other methods, which are not limited in the embodiment of the present invention.

In steps 21 and 22, the AP sets A and B may overlap or not overlap.

For CoMP transmission, a large amount of coordination information needs to be transmitted from an eNodeB to a UE using the CoMP transmission service. The information includes:
(1) Cell IDs of multiple cells providing transmission services for the UE or a group cell ID of a cell group providing services for the UE;
(2) transmission weight factor or pre-coding matrix indicator of each serving cell; and
(3) time-frequency resources for the CoMP transmission.

It should be noted that the coordination information carried on the control channel is used for CoMP communication. UEs that do not accept the CoMP services do not receive or detect these control channels, or they discard the detected information or fail to detect the information. Only the UEs that use the CoMP transmission scheme may receive and detect these control channels.

According to the method for CoMP transmission in the embodiment of the present invention, because the control channel uses the AP or AP set different from that of the data channel to perform CoMP transmission, the control channel and data channel have different coverage ranges. As a result, the BER on the control channel may be reduced and the reliability of data transmission over the control channel and data channel may be improved.

Still with reference to FIG. 2, an exemplary embodiment of the present invention provides a method for CoMP transmission. The method includes the following steps:
Step 23: During the CoMP transmission, the data channel is switched and the control channel carrying the coordination information is kept unchanged when the data channel needs to be changed; or the control channel is switched and the data channel is kept unchanged when the control channel carrying the coordination information needs to be changed.

The variation in this embodiment represents that the AP or AP set is changed, and that the transmission mode, such as the spatial diversity and spatial multiplexing, of the data channel/the control channel is changed.

The control channel used for transmitting the coordination information may be separate from the Physical Downlink Shared Channel (PDSCH), and may be independent of the data channel. When the data channel is changed, the control channel used for transmitting the coordination information is kept unchanged; or when the control channel is changed, the data channel is kept unchanged. That is, the control channel and the data channel may not be necessarily switched simultaneously. Therefore, the embodiment of the present invention may also enhance the application flexibility of the CoMP transmission scheme so that the serving cell group of the data channel and/or the control channel is more adaptable to different application scenarios and wireless channel environments. This improves the system flexibility.

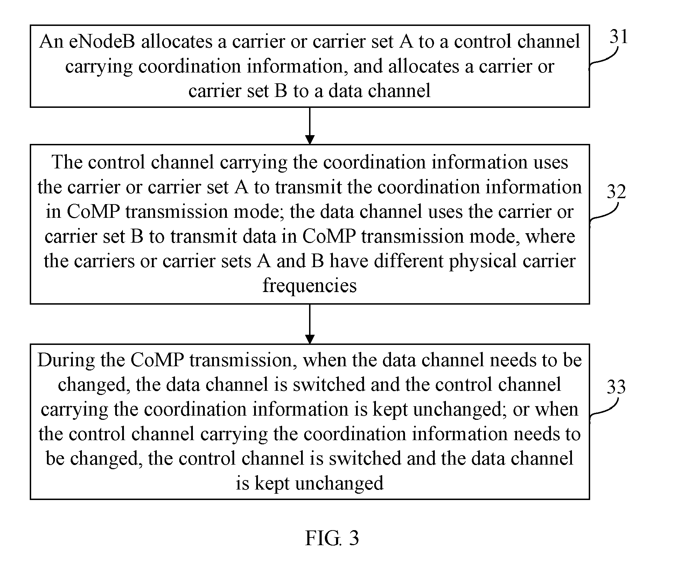

Referring to FIG. 3, another embodiment of the present invention provides a method for CoMP transmission. The method includes the following steps:
Step 31: An eNodeB allocates a carrier a or carrier set A to a control channel carrying coordination information, and allocates a carrier b or carrier set B to a data channel.

Specifically, the carriers a and b or carrier sets A and B may be different component carriers in a carrier aggregation system. The control channel carrying the coordination information is mapped to a non-home carrier for CoMP transmission, and the basic control channel is mapped to a home carrier for CoMP transmission. For example, the coordination information carried on the control channel may be mapped to the first one, two, three, or four symbols of the non-home carrier, and other symbols of the non-home carrier may still be used for transmitting service data.

Step 32: The control channel carrying the coordination information uses a carrier a or carrier set A to transmit the coordination information in CoMP transmission mode. The data channel uses a carrier b or carrier set B to transmit data in CoMP transmission mode. The carriers a and b or carrier sets A and B have different physical carrier frequencies.

Step 33: During the CoMP transmission, the data channel is switched and the control channel carrying the coordination information is kept unchanged when the data channel needs to be changed; or the control channel is switched and the data channel is kept unchanged when the control channel carrying the coordination information needs to be changed.

The variation in this embodiment represents that the carrier or carrier set is changed, and that the transmission mode, such as the spatial diversity and spatial multiplexing, of the data channel or control channel is changed.

It should be noted that the coordination information carried on the control channel is used for CoMP communication. UEs that do not accept the CoMP services do not receive or detect these control channels, or they discard the detected information or fail to detect the information. Only the UEs that use the CoMP transmission scheme may receive and detect these control channels. A legacy UE does not need to receive and detect the control channel. Meanwhile, the new coordination information does not need to be stored on the control channel of a legacy UE, but may be stored on the new control channel of the non-home carrier so that the backward compatibility issues can be better solved.

According to the method for CoMP transmission in the embodiment of the present invention, because the control channel uses the carrier or carrier set different from that of the data channel to perform CoMP transmission, the control channel and data channel have different coverage ranges. As a result, the BER on the control channel can be reduced, and the reliability of data transmission over the control channel and data channel may be improved. In addition, the control channel used for transmitting the coordination information may be separate from the PDSCH, and may be independent of the data channel. When the data channel is changed, the control channel used for transmitting the coordination information is kept unchanged; or when the control channel is changed, the data channel is kept unchanged. That is, the control channel and the data channel may not be necessarily switched simultaneously. Therefore, the embodiment of the present invention may also enhance the application flexibility of the CoMP transmission scheme so that the serving cell group of the data channel and/or the control channel is more adaptable to different application scenarios and wireless channel environments. This improves the system flexibility.

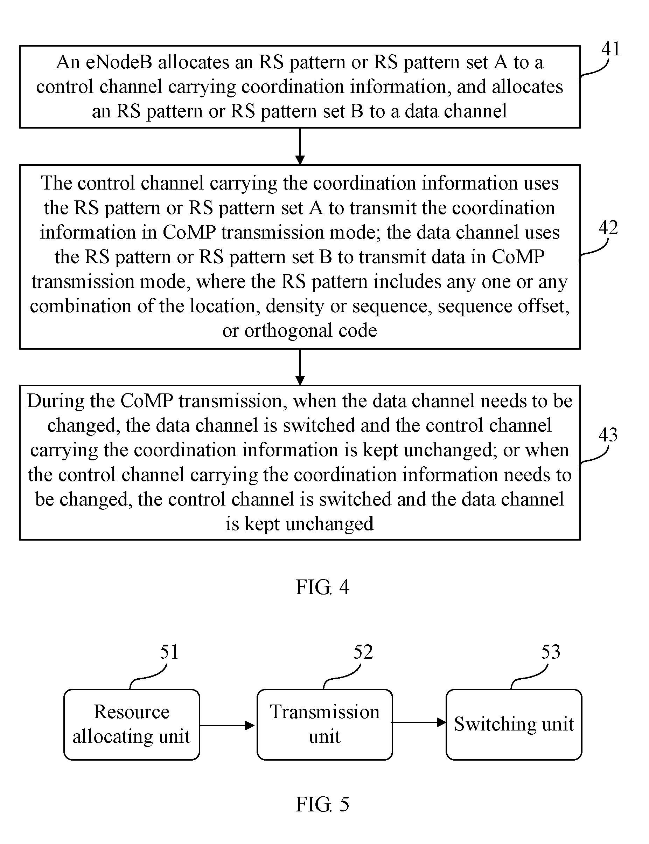

Referring to FIG. 4, another embodiment of the present invention provides a method for CoMP transmission. The method includes the following steps:
Step 41: An eNodeB allocates an RS pattern a or RS pattern set A to a control channel carrying coordination information, and allocates an RS pattern b or RS pattern set B to a data channel.
Step 42: The control channel carrying the coordination information uses the RS pattern a or RS pattern set A to transmit the coordination information in CoMP transmission mode. The data channel uses the RS pattern b or RS pattern set B to transmit data in CoMP transmission mode. The RS pattern includes any one or any combination of the location, density or sequence, sequence offset, or orthogonal code of the RS.
Step 43: During the CoMP transmission, the data channel is switched and the control channel carrying the coordination information is kept unchanged when the data channel needs to be changed; or the control channel is switched and the data channel is kept unchanged when the control channel carrying the coordination information needs to be changed.

The embodiment of the present invention may be used for channel estimation. The RS patterns a and b or RS pattern sets A and B may be distinguished by using any one or any combination of technologies of Frequency Division Multiplexing (FDM), Time Division Multiplexing (TDM), or Code Division Multiplexing (CDM), or by using one or any combination of the density, sequence, sequence offset, or orthogonal code of the RS patterns a and b or RS pattern sets A and B.

It should be noted that the coordination information carried on the control channel is used for CoMP communication. UEs that do not accept the CoMP services do not receive or detect these control channels, or they discard the detected information or fail to detect the information. Only the UEs that use the CoMP transmission scheme may receive and detect these control channels.

According to the method for CoMP transmission in the embodiment of the present invention, because the control channel uses the RS pattern or RS pattern set different from that of the data channel to perform CoMP transmission, the control channel and data channel have different coverage ranges. As a result, the BER on the control channel can be reduced, and the reliability of data transmission over the control channel and data channel can be improved. The control channel used for transmitting the coordination information may be separate from the PDSCH, and may be independent of the data channel. When the data channel is changed, the control channel used for transmitting the coordination information is kept unchanged; or when the control channel is changed, the data channel is kept unchanged. That is, the control channel and the data channel may not be necessarily switched simultaneously. Therefore, the embodiment of the present invention may also enhance the application flexibility of the CoMP transmission scheme so that the serving cell group of the data channel and/or the control channel is more adaptable to different application scenarios and wireless channel environments. This improves the system flexibility.

The method for CoMP transmission has been described through exemplary embodiments. It should be noted that the present invention may be applicable to the CDMA system, Time Division Multiple Access (TDMA) system, or other mobile communication systems in addition to the OFDM system.

Corresponding to embodiments of the method for CoMP transmission, embodiments of the present invention also provide an apparatus and a system for CoMP transmission.

Referring to FIG. 5, one embodiment of the present invention provides an apparatus for CoMP transmission. The apparatus includes:
a resource allocating unit 51, configured to allocate different resources to a control channel carrying coordination information and a data channel; and
a transmission unit 52, configured to perform CoMP transmission over the control channel and the data channel by using the different resources allocated by the resource allocating unit 51.

Specifically, the resource allocating unit 51 is configured to allocate to the control channel carrying the coordination information and the data channel any one or any combination of the following resources: different APs or AP sets, different carriers or carrier sets, different RS patterns or RS pattern sets, different subframes or subframe sets, different physical resource blocks or physical resource block sets, different timeslots or timeslot sets, different OFDM symbols or OFDM symbol sets, different sequences or sequence sets, different sequence offsets or sequence offset sets, different sequence combs or sequence comb sets, different frequency-hopping patterns or frequency-hopping pattern sets, different periods or period sets, and different scramblers or scrambler sets.

Corresponding to the resource allocating unit 51, specifically, the transmission unit 52 includes any one or any combination of the following modules:
an AP transmission module, configured to perform CoMP transmission over the control channel and the data channel by using different APs or AP sets;
a carrier transmission module, configured to perform CoMP transmission over the control channel and the data channel by using different carriers or carrier sets;
an RS pattern module, configured to perform CoMP transmission over the control channel and the data channel by using different RS patterns or RS pattern sets;
a subcarrier transmission module, configured to perform CoMP transmission over the control channel and the data channel by using different subcarriers or subcarrier sets;
a resource block transmission module, configured to perform CoMP transmission over the control channel and the data channel by using different physical resource blocks or physical resource block sets;
a subframe transmission module, configured to perform CoMP transmission over the control channel and the data channel by using different subframes or subframe sets;
a timeslot module, configured to perform CoMP transmission over the control channel and the data channel by using different timeslots or timeslot sets;
an OFDM transmission module, configured to perform CoMP transmission over the control channel and the data channel by using different OFDM symbols or OFDM symbol sets;
a sequence module, configured to perform CoMP transmission over the control channel and the data channel by using different sequences or sequence sets;
a sequence offset transmission module, configured to perform CoMP transmission over the control channel and the data channel by using different sequence offsets or sequence offset sets;
a sequence comb transmission module, configured to perform CoMP transmission over the control channel and the data channel by using different sequence combs or sequence comb sets;
a frequency-hopping pattern transmission module, configured to perform CoMP transmission over the control channel and the data channel by using different frequency-hopping patterns or frequency-hopping pattern sets;
a period module, configured to perform CoMP transmission over the control channel and the data channel by using different periods or period sets; and
a scrambler transmission module, configured to perform CoMP transmission over the control channel and the data channel by using different scramblers or scrambler sets.

Preferably, the apparatus according to one embodiment of the present invention further includes:
a switching unit 53, configured to: during the CoMP transmission performed by the transmission unit 52, switch the data channel and keep the control channel, which carries the coordination information, unchanged when the data channel needs to be changed; or switch the control channel and keep the data channel unchanged when the control channel carrying the coordination information needs to be changed.

It should be noted that the coordination information carried on the control channel is used for CoMP communication. UEs that do not accept the CoMP services do not receive or detect these control channels, or they discard the detected information or fail to detect the information. Only the UEs that use the CoMP transmission scheme may receive and detect these control channels.

In the apparatus for CoMP transmission according to the embodiment of the present invention, the resource allocating unit 51 allocates different resources to the control channel carrying the coordination information and the data channel, and the transmission unit 52 performs the CoMP transmission by using resources different from those of the data channel, so that the control channel and data channel have different coverage ranges. Therefore, the BER on the control channel can be reduced and the transmission reliability on the control channel and data channel can be enhanced. Further, the control channel used for transmitting the coordination information may be separate from the PDSCH, and may be independent of the data channel. During the CoMP transmission performed by the transmission unit 52, the switching unit 53 is configured to keep the control channel, which is used for transmitting the coordination information, unchanged when the data channel is changed, or keep the data channel unchanged when the control channel is changed. That is, the control channel and the data channel may not be necessarily switched simultaneously. Therefore, the embodiment of the present invention may also enhance the application flexibility of the CoMP transmission scheme so that the serving cell group of the data channel and/or the control channel is more adaptable to different application scenarios and wireless channel environments. This improves the system flexibility.

One embodiment of the present invention provides a system for CoMP transmission, including an eNodeB.

The eNodeB is configured to allocate different resources to a control channel carrying coordination information and a data channel, and perform CoMP transmission over the control channel and the data channel by using the allocated different resources.

The eNodeB is specifically configured to perform CoMP transmission over the control channel and the data channel by using any one or any combination of different APs or AP sets, different carriers or carrier sets, different RS patterns or RS pattern sets, different subcarriers or subcarrier sets, different physical resource blocks or physical resource block sets, different subframes or subframe sets, different timeslots or timeslot sets, different OFDM symbols or OFDM symbol sets, different sequences or sequence sets, different sequence offsets or sequence offset sets, different sequence combs or sequence comb sets, different frequency-hopping patterns or frequency-hopping pattern sets, different periods or period sets, and different scramblers or scrambler sets.

The eNodeB is further configured to: during the CoMP transmission, switch the data channel and keep the control channel, which carries the coordination information, unchanged when the data channel needs to be changed; or, switch the control channel and keep the data channel unchanged when the control channel carrying the coordination information needs to be changed.

It should be noted that the coordination information carried on the control channel is used for CoMP communication. UEs that do not accept the CoMP services do not receive or detect these control channels, or they discard the detected information or fail to detect the information. Only the UEs that use the CoMP transmission scheme may receive and detect these control channels.

In the system for CoMP transmission according to the embodiment of the present invention, the eNodeB allocates different resources to the control channel carrying the coordination information and the data channel, and performs CoMP transmission over the control channel and data channel by using the allocated different resources, so that the control channel and data channel have different coverage ranges. Therefore, the BER on the control channel can be reduced and the transmission reliability on the control channel and data channel can be enhanced. Further, the control channel used for transmitting the coordination information may be separate from the PDSCH, and may be independent of the data channel. When the data channel is changed, the control channel used for transmitting the coordination information is kept unchanged; or when the control channel is changed, the data channel is kept unchanged. That is, the control channel and the data channel may not be necessarily switched simultaneously. Therefore, the embodiment of the present invention may also enhance the application flexibility of the CoMP transmission scheme so that the serving cell group of the data channel and/or the control channel is more adaptable to different application scenarios and wireless channel environments. This improves the system flexibility.

It should be finally noted that persons of ordinary skill in the art may understand that all or part of the steps of the method according to the embodiments of the present invention may be implemented by a program instructing relevant hardware. The program may be stored in a computer readable storage medium, and when the program runs, the steps in the method embodiments of the present invention may be performed. The storage medium may be a magnetic disk, a Compact Disk-Read Only Memory (CD-ROM), a Read Only Memory (ROM) or a Random Access Memory (RAM).

Various function units in embodiments of the present invention may be integrated in one processing module, or be physically independent; or two or more function units may be integrated into one module. The preceding integrated module may be not only implemented in the form of hardware, but also implemented in the form of a software function module. If the integrated module is implemented in the form of a software functional module, and functions as an independent product for sale or use, it may also be stored in a computer readable storage medium. The preceding computer readable storage medium may be a readable memory, a disk, or a CD-ROM.

Various embodiments of the present invention described above are only exemplary embodiments, and are not intended to limit the protection scope of the present invention. Any equivalent replacement, variation, and modification made according to the principle of the present invention shall be definitely covered by the protection scope of the present invention.

## Claims

1. A method for Coordinated Multi-Point (CoMP) transmission, comprising:
allocating different resources to a control channel carrying coordination information and a data channel; and
performing CoMP transmission over the control channel and the data channel by using the allocated different resources.

2. The method according to claim 1, further comprising:
during the CoMP transmission, switching the data channel and keeping the control channel, which carries the coordination information, unchanged when the data channel needs to be changed; or
during the CoMP transmission, switching the control channel and keeping the data channel unchanged when the control channel carrying the coordination information needs to be changed.

3. The method according to claim 1, wherein the step of performing the CoMP transmission over the control channel and the data channel by using the allocated different resources comprises:
performing the CoMP transmission over the control channel carrying the coordination information and the data channel by using completely different resources, or by using partially same resources.

4. The method according to any one of claims 1 to 3, wherein the resources comprise:
any one or any combination of Access Points (APs) or AP sets, carriers or carrier sets, Reference Signal (RS) patterns or RS pattern sets, subcarriers or subcarrier sets, physical resource blocks or physical resource block sets, subframes or subframe sets, timeslots or timeslot sets, Orthogonal Frequency Division Multiplexing (OFDM) symbols or OFDM symbol sets, sequences or sequence sets, sequence offsets or sequence offset sets, sequence combs or sequence comb sets, frequency-hopping patterns or frequency-hopping pattern sets, periods or period sets, and scramblers or scrambler sets.

5. The method according to claim 1, wherein the step of performing the CoMP transmission over the control channel and the data channel by using the allocated different resources comprises:
performing the CoMP transmission over the control channel and the data channel by using different Access Points (APs) or AP sets, wherein the different APs or AP sets have different serving cell groups; or
performing the CoMP transmission over the control channel and the data channel by using different Reference Signal (RS) patterns or RS pattern sets, wherein the RS patterns comprise any one or any combination of pilot location, density, sequence, sequence offset, or orthogonal code.

6. The method according to claim 1, wherein the step of performing the CoMP transmission over the control channel and the data channel by using the allocated different resources comprises:
performing the CoMP transmission over the control channel and the data channel by using different carriers or carrier sets, wherein the different carriers or carrier sets have different physical carrier frequencies.

7. The method according to claim 6, wherein the control channel is mapped to a specific symbol of a non-home carrier, and the data channel is mapped to other symbol that is different from the specific symbol of the non-home carrier.

8. An apparatus for Coordinated Multi-Point (CoMP) transmission, comprising:
a resource allocating unit, configured to allocate different resources to a control channel carrying coordination information and a data channel; and
a transmission unit, configured to perform CoMP transmission over the control channel and the data channel by using the different resources allocated by the resource allocating unit.

9. The apparatus according to claim 8, further comprising:
a switching unit, configured to: during the CoMP transmission performed by the transmission unit, switch the data channel and keep the control channel, which carries the coordination information, unchanged when the data channel needs to be changed; or switch the control channel and keep the data channel unchanged when the control channel carrying the coordination information needs to be changed.

10. The apparatus according to claim 8, wherein the transmission unit comprises any one or any combination of the following modules:
an Access Point (AP) transmission module, configured to perform CoMP transmission over the control channel and the data channel by using different APs or AP sets;
a carrier transmission module, configured to perform CoMP transmission over the control channel and the data channel by using different carriers or carrier sets;
a Reference Signal (RS) pattern module, configured to perform CoMP transmission over the control channel and the data channel by using different RS patterns or RS pattern sets;
a subcarrier transmission module, configured to perform CoMP transmission over the control channel and the data channel by using different subcarriers or subcarrier sets;
a resource block transmission module, configured to perform CoMP transmission over the control channel and the data channel by using different physical resource blocks or physical resource block sets;
a subframe transmission module, configured to perform CoMP transmission over the control channel and the data channel by using different subframes or subframe sets;
a timeslot transmission module, configured to perform CoMP transmission over the control channel and the data channel by using different timeslots or timeslot sets;
an Orthogonal Frequency Division Multiplexing (OFDM) transmission module, configured to perform CoMP transmission over the control channel and the data channel by using different OFDM symbols or OFDM symbol sets;
a sequence module, configured to perform CoMP transmission over the control channel and the data channel by using different sequences or sequence sets;
a sequence offset transmission module, configured to perform CoMP transmission over the control channel and the data channel by using different sequence offsets or sequence offset sets;
a sequence comb transmission module, configured to perform CoMP transmission over the control channel and the data channel by using different sequence combs or sequence comb sets;
a frequency-hopping pattern transmission module, configured to perform CoMP transmission over the control channel and the data channel by using different frequency-hopping patterns or frequency-hopping pattern sets;
a period module, configured to perform CoMP transmission over the control channel and the data channel by using different periods or period sets; and
a scrambler transmission module, configured to perform CoMP transmission over the control channel and the data channel by using different scramblers or scrambler sets.

11. A system for Coordinated Multi-Point (CoMP) transmission, comprising an evolved Node B (eNodeB), wherein:
the eNodeB is configured to allocate different resources to a control channel carrying coordination information and a data channel, and perform CoMP transmission over the control channel and the data channel by using the allocated different resources.

12. The system according to claim 11, wherein the eNodeB is specifically configured to perform CoMP transmission over the control channel and the data channel by using resources comprising:
any one or any combination of Access Points (APs) or AP sets, carriers or carrier sets, Reference Signal (RS) patterns or RS pattern sets, subcarriers or subcarrier sets, physical resource blocks or physical resource block sets, subframes or subframe sets, timeslots or timeslot sets, Orthogonal Frequency Division Multiplexing (OFDM) symbols or OFDM symbol sets, sequences or sequence sets, sequence offsets or sequence offset sets, sequence combs or sequence comb sets, frequency-hopping patterns or frequency-hopping pattern sets, periods or period sets, and scramblers or scrambler sets.

13. The system according to claim 11, wherein:
the eNodeB is further configured to: during the CoMP transmission, switch the data channel and keep the control channel, which carries the coordination information, unchanged when the data channel needs to be changed; or switch the control channel and keep the data channel unchanged when the control channel carrying the coordination information needs to be changed.
